# EUROPEAN PATENT APPLICATION

(11) **EP 3 745 557 A1**
(43) Date of publication of application: **02.12.2020**
(21) Application number: 20176396.8
(22) Date of filing: 26.05.2020
(51) Int. Cl.: H02J 50/12, H01F 27/36, H01F 38/14

(54) **POWER SUPPLY DEVICE**

(30) Priority: 27.05.2019 JP 2019098758
(71) Applicant: Nidec Corporation, Minami-ku, Kyoto-shi, Kyoto 601-8205 (JP); Nidec SSB Wind Systems GmbH, 48499 Salzbergen (DE)
(72) Inventor: BERTOLOTTI, Fabio, 48499 Salzbergen (DE); KATO, Masaki, Kyoto 601-8205 (JP)
(74) Representative: Becker, Eberhard

(57) **Abstract**

A power supply device includes a first resonance unit (2) having a first resonance frequency; a second resonance unit (4) coupled to the first resonance unit (2) through a magnetic field, the second resonance unit (4) having the first resonance frequency; and an insulation unit (3) that provides electrical insulation between the first resonance unit (2) and the second resonance unit (4). The insulation unit (3) has a predetermined insulation distance determined in accordance with a predetermined withstanding voltage and an insulator of the insulation unit (3).

## Description

### FIELD OF THE INVENTION

The present invention relates to a power supply device that supplies power to another device.

### DESCRIPTION OF THE RELATED ART

In an apparatus, such as a wind power generating apparatus, that is installed at an elevation, a control circuit or the like within the apparatus needs to be protected from an electric shock caused upon being struck by lightning (in particular, indirect lightning).

Conventionally, a lightning arrester that discharges electricity associated with lightning to the ground is used to protect an apparatus. However, protection provided by a lightning arrester is not sufficient in some cases. There is also a method of electrically insulating a signal by using an optical fiber or the like for a signal line between a control circuit or the like within an apparatus and an external apparatus. However, power cannot be supplied to the control circuit or the like within the apparatus with the optical fiber or the like.

With regard to a method of transmitting power while insulating a control circuit or the like within an apparatus and a power source from each other, for example, according to the technique disclosed in Japanese Published Unexamined Patent Application No. 2014-148928, coaxial metal plates are provided on a primary shaft portion of a windmill, and power is transmitted between the metal plates through an electric field scheme. Thus, power is transmitted with electrical insulation retained. According to the technique disclosed in Japanese Published Unexamined Patent Application No. 2002-101578, an example is described in which power is transmitted through a window pane with the use of a magnetic field in an electromagnetic induction scheme.

However, with regard to the technique disclosed in Japanese Published Unexamined Patent Application No. 2014-148928, since an electric field is used to transmit power, theoretically there is a limitation on the insulation distance. In addition, the structure makes it difficult to include an insulating material, such as glass. With regard to the technique disclosed in Japanese Published Unexamined Patent Application No. 2002-101578, since electromagnetic induction is used to transmit power, the transmission distance is about a several millimeters. Therefore, there is a limitation on the insulation distance.

### SUMMARY OF THE INVENTION

In order to overcome the above-described problems, one aspect of the present invention provides a power supply device that includes: a first resonance unit having a first resonance frequency; a second resonance unit coupled to the first resonance unit through a magnetic field, the second resonance unit having the first resonance frequency; and an insulation unit that provides electrical insulation between the first resonance unit and the second resonance unit. The insulation unit has a predetermined insulation distance determined in accordance with a predetermined withstanding voltage and an insulator of the insulation unit.

The present invention configured as described above makes it possible to supply power while ensuring an insulation distance between a control circuit or the like within an apparatus and a power source external to the apparatus.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a block diagram illustrating an exemplary configuration of a power supply device according to a first embodiment of the present invention.
Fig. 2 is a cross-sectional view illustrating an exemplary configuration of the power supply device.
Fig. 3 is a view useful to describe the voltage increase and the voltage decrease in a circuit that connects a rectification unit to a load when lightning occurs.
Fig. 4 is a block diagram illustrating an exemplary configuration of a power supply device according to a second embodiment of the present invention.
Fig. 5 is a cross-sectional view illustrating an exemplary configuration of the power supply device.
Fig. 6 is a cross-sectional view illustrating an exemplary configuration of a connection unit connecting to the power supply device.
Fig. 7 is a cross-sectional view illustrating a state in which the connection unit is connected to the power supply device.
Fig. 8 is a block diagram illustrating an exemplary configuration of a power supply device according to a third embodiment of the present invention.
Fig. 9 is a cross-sectional view illustrating an exemplary configuration of the power supply device.
Fig. 10 is a block diagram illustrating an exemplary configuration of a power supply device according to a fourth embodiment of the present invention.
Fig. 11 is a cross-sectional view illustrating an exemplary configuration of the power supply device.
Fig. 12 is a cross-sectional view illustrating an exemplary arrangement of a circuit in the power supply device.

### DETAILED DESCRIPTION OF THE PREFERRED EMBODIMENTS

Hereinafter, embodiments for implementing the present invention will be described in detail with reference to the appended drawings.

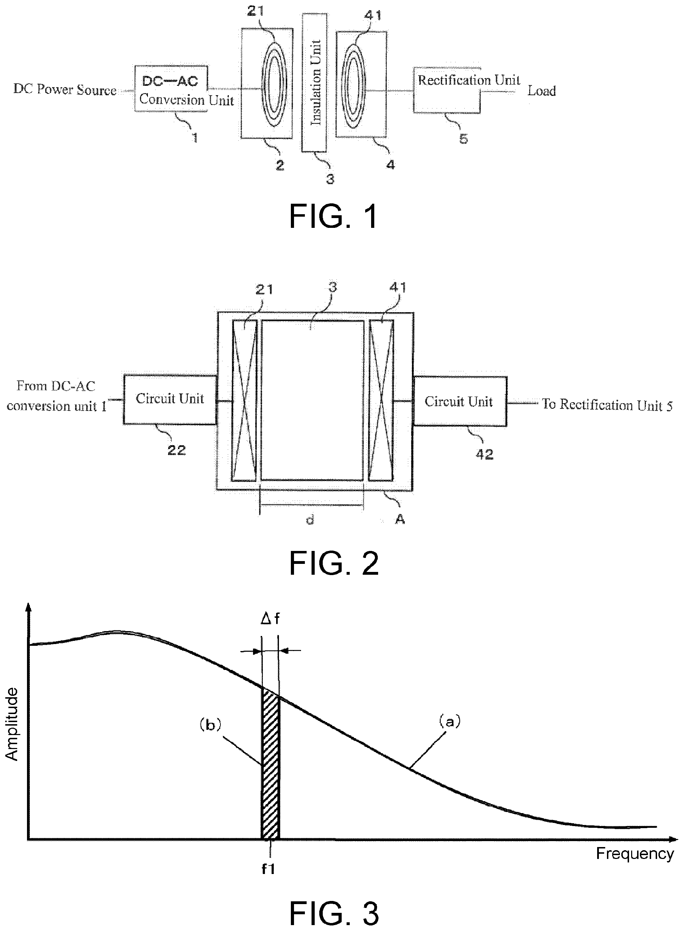

Fig. 1 is a block diagram illustrating an exemplary configuration of a power supply device according to a first embodiment of the present invention.

The power supply device includes a DC-AC conversion unit (DC to AC converter) 1 that converts a DC power source to an AC voltage, a resonance unit 2 on a power transmitter side, a resonance unit 4 on a power receiver side that is coupled to the resonance unit 2 through a magnetic field, an insulation unit 3 that provides electrical insulation between the resonance unit 2 and the resonance unit 4, and a rectification unit 5 that rectifies a voltage from the resonance unit 4 and supplies the rectified voltage to a load.

As illustrated in Fig. 2, for example, the resonance unit 2 includes a primary coil 21 and a circuit unit 22. A capacitor connected to the primary coil 21 is provided in the circuit unit 22, and the capacitor and the primary coil 21 constitute a resonance circuit. This resonance circuit has a predetermined resonance frequency determined in accordance with the inductance of the primary coil 21 and the capacitance of the capacitor.

The resonance unit 4 includes a secondary coil 41 and a circuit unit 42. A capacitor connected to the secondary coil 41 is provided in the circuit unit 42, and the capacitor and the secondary coil 41 constitute a resonance circuit. This resonance circuit has a predetermined resonance frequency determined in accordance with the inductance of the secondary coil 41 and the capacitance of the capacitor. The resonance unit 2 and the resonance unit 4 have the same resonance frequency, or a frequency f1. Thus, upon power having this resonance frequency being supplied to the resonance unit 2, magnetic resonance occurs between the resonance unit 2 and the resonance unit 4, which makes it possible to supply power from the resonance unit 2 to the resonance unit 4 with high efficiency. From the viewpoint of efficiency in power supply, it is desirable that the frequency f1 be approximately from 10 kHz to 100 kHz, for example. Also, from the viewpoint of size reduction, the frequency f1 may take a higher value, such as 6.78MHz, 13.56MHz or the like. This can reduce the physical size of the primary coil 21 and the secondary coil 41.

The insulation unit 3, the primary coil 21, and the secondary coil 41 are housed in a housing A. A distance d between the primary coil 21 and the secondary coil 41, that is, an insulation distance of the insulation unit 3 is determined in accordance with a predetermined withstanding voltage required for the power supply device and an insulator of the insulation unit 3. Specifically, the primary coil 21 and the secondary coil 41 are disposed in accordance with the insulation distance. Since the insulating strength differs among different isolators, it is desirable that the insulation distance be adjusted as appropriate in accordance with the insulating strength of a material used for the insulation unit 3. It is desirable that the insulation distance be set, for example, to a thickness that provides an insulating strength of approximately twice or more the required withstanding voltage. For example, Pyrex glass has an insulating strength of 14 MV/m, and thus when the required withstanding voltage is 300 kV, it is desirable that the insulation distance be approximately 43 mm or more providing an insulating strength of 600 kV or more. It should be noted that the material of the insulation unit 3 is not limited to Pyrex glass, and other isolators may be used. For example, Teflon (registered trademark) has an insulating strength of 60 MV/m, and thus when Teflon (registered trademark) is used as the insulator of the insulation unit 3, the insulation distance can be reduced, as compared to the case in which Pyrex glass is used.

A diameter of the primary coil 21 and a diameter of the secondary coil 41 are determined in accordance with the insulation distance. Specifically, it is desirable that the diameter of the primary coil 21 and the diameter of the secondary coil 41 be substantially equal to the insulation distance, from the viewpoint of efficiency in power supply.

The rectification unit 5 includes a smoothing circuit and a bridge circuit provided, for example, with four diodes. The rectification unit 5 converts an AC voltage from the resonance unit 4 into a DC voltage and supplies the converted DC voltage to the load. It is desirable that the rectification unit 5 be provided with an impedance matching unit that makes the impedance match the impedance of the load.

When the power supply device having the above-described configuration is used, a DC voltage is supplied to the DC-AC 1 from an external power source. An output voltage of the rectification unit 5 is supplied to an external load. The DC-AC 1 converts the supplied DC voltage to an AC voltage having the resonance frequency of the resonance unit 2 and supplies the converted AC voltage to the resonance unit 2. The supplied AC current having the resonance frequency flows through the primary coil 21 of the resonance unit 2, and an AC magnetic field corresponding to the flowing current is generated.

An AC current corresponding to the AC magnetic field in the primary coil 21 is generated in the secondary coil 41, and an AC voltage corresponding to this AC current is supplied to the rectification unit 5 from the resonance unit 2. The rectification unit 5 converts the AC voltage supplied from the resonance unit 2 into a DC voltage and supplies the converted DC voltage to the load. According to this embodiment, the above-described operation makes it possible to supply power from the side of the resonance unit 2 to the side of the resonance unit 4.

In the meantime, the resonantly coupled coils for the transmission of power (the primary coil 21 and the secondary coil 41) in this embodiment provide a dynamic barrier to the effects of lightning strikes in addition to a barrier provided by the insulation unit 3 between the coils. When lightning occurs, it may produce, via electromagnetic induction, an induced voltage pulse comprising a rapid rise and fall of voltage in the circuit connecting the rectification unit 5 and the load. It is well known in the art that such rapid rise and fall of voltage contains a wide range of frequencies, shown as spectrum (a) in Fig. 3.

Because the magnetic resonance is utilized in this embodiment, only the frequency component (Δf) in the induced voltage pulse at frequencies near the system resonant frequency, f1, will pass from the resonance unit 4 to the resonance unit 2. Frequency components at other frequencies will be greatly attenuated due to the large physical separation between the resonance unit 2 and the resonance unit 4. Consequently, only a small portion of the total energy of the induced voltage pulse ((b) in Fig. 3) will be transmitted to the DC to AC converter 1. This property of the embodiment is favorable and desired since it provides additional insulation from the effects of the lightning pulse to all circuits connected with the DC to AC converter 1.

As described above, according to this embodiment, the insulation unit 3 is provided between the resonance unit 2 and the resonance unit 4, and the insulation distance of the insulation unit 3 is determined in accordance with a predetermined required withstanding voltage and the insulator of the insulation unit. This makes it possible to supply power while ensuring the insulation distance between a power source external to an apparatus and a control circuit or the like within the apparatus.

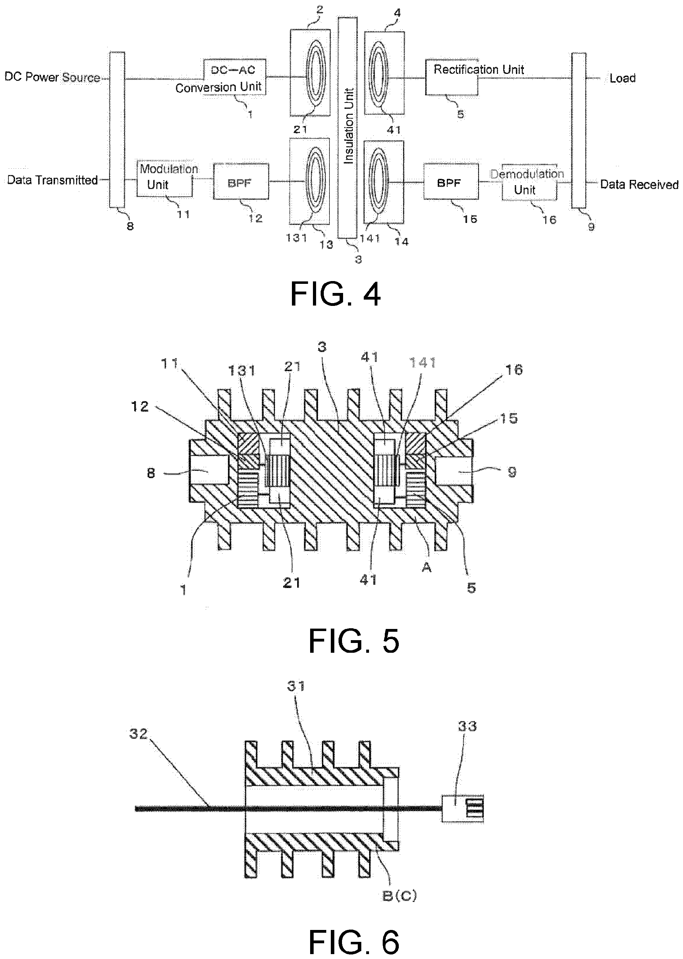

Fig. 4 is a block diagram illustrating an exemplary configuration of a power supply device according to a second embodiment of the present invention.

The power supply device according to the first embodiment includes the pair of resonance units 2 and 4, whereas the power supply device according to this embodiment includes another pair of resonance units 13 and 14. In addition, power is supplied from the side of the resonance unit 2 to the side of the resonance unit 4 in the first embodiment, whereas a data signal is transmitted between the resonance unit 13 and the resonance unit 14 in this embodiment. In Fig. 4, portions having similar functions as those illustrated in Fig. 1 are given identical reference characters. In the example described below, a data signal is transmitted from the resonance unit 13 to the resonance unit 14, but a data signal may be transmitted from the resonance unit 14 to the resonance unit 13 by modifying the configuration as appropriate.

The power supply device includes a connector 8 to which power and transmission data are supplied from the outside and a connector 9 that supplies power and reception data to the outside. In this power supply device, the Power over Ethernet (registered trademark) function is used, for example. RJ-45 connectors, for example, are used for the connectors 8 and 9. Any scheme, other than the Power over Ethernet (registered trademark) function, that can transmit power and data may be used. Any connector other than the RJ-45 connector may be used for the connectors 8 and 9.

The power supply device includes a modulation unit 11 that modulates transmission data, a band-pass filter (BPF) 12 that allows a predetermined band of the modulated signal to pass therethrough, the resonance unit 13 on the transmitter side, the resonance unit 14 on the receiver side coupled to the resonance unit 13 through a magnetic field via the insulation unit 3, a BPF 15 that allows a predetermined band of the signal from the resonance unit 14 to pass therethrough, and a demodulation unit 16 that reproduces the reception data through demodulation.

The resonance unit 13 includes a tertiary coil 131 and a circuit unit (not illustrated). A capacitor connected to the tertiary coil 131 is provided in the circuit unit, and the capacitor and the tertiary coil 131 constitute a resonance circuit. The resonance unit 14 includes a quaternary coil 141 and a circuit unit (not illustrated). A capacitor connected to the quaternary coil 141 is provided in the circuit unit, and the capacitor and the quaternary coil 141 constitute a resonance circuit. The resonance unit 13 and the resonance unit 14 have the same resonance frequency, or a frequency f2. Thus, magnetic resonance occurs between the resonance unit 13 and the resonance unit 14, which makes it possible to transmit a data signal from the resonance unit 13 to the resonance unit 14 with high efficiency. The frequency f2 is 4 MHz, for example, when the baseband frequency of the data signal is 1 MHz.

Fig. 5 is a cross-sectional view illustrating an exemplary configuration of the power supply device according to this embodiment.

In this embodiment, the insulation unit 3 and the housing **A** are integrated. The housing A has a circular section along a plane perpendicular to its axial direction. The insulation unit 3 providing isolation between the primary coil 21 and secondary coil 41 and the tertiary coil 131 and quaternary coil 141 is formed at a middle portion of the housing A in the axial direction. Cylindrical spaces are formed at respective ends of the insulation unit 3 in the axial direction. The DC-AC 1, the modulation unit 11, the BPF 12, the primary coil 21, the tertiary coil 131, and so on are housed in the space at one end of the insulation unit 3. The primary coil 21 and the tertiary coil 131 are disposed coaxially. The rectification unit 5, the BPF 15, the demodulation unit 16, the secondary coil 41, and the quaternary coil 141 are housed in the space at the other end of the insulation unit 3. Concavities and convexities are provided on the outer periphery of the housing **A** along the axial direction in order to prevent creeping discharge. The secondary coil 41 and the quaternary coil 141 are disposed coaxially.

Fig. 6 is a cross-sectional view illustrating an exemplary configuration of a connection unit connecting to the power supply device.

The connection unit includes an insulation unit 31 constituting a housing **B** (**C**) connecting to one end of the housing **A**, a cable 32 used to transmit a power source and a signal, and a plug 33 connecting to the connector 8 (9). A hole that is sufficient for the plug to pass therethrough is formed at a center portion of the housing **B** (**C**) in the axial direction. Concavities and convexities are provided on the outer periphery of the housing **B** (**C**) along the axial direction in order to prevent creeping discharge.

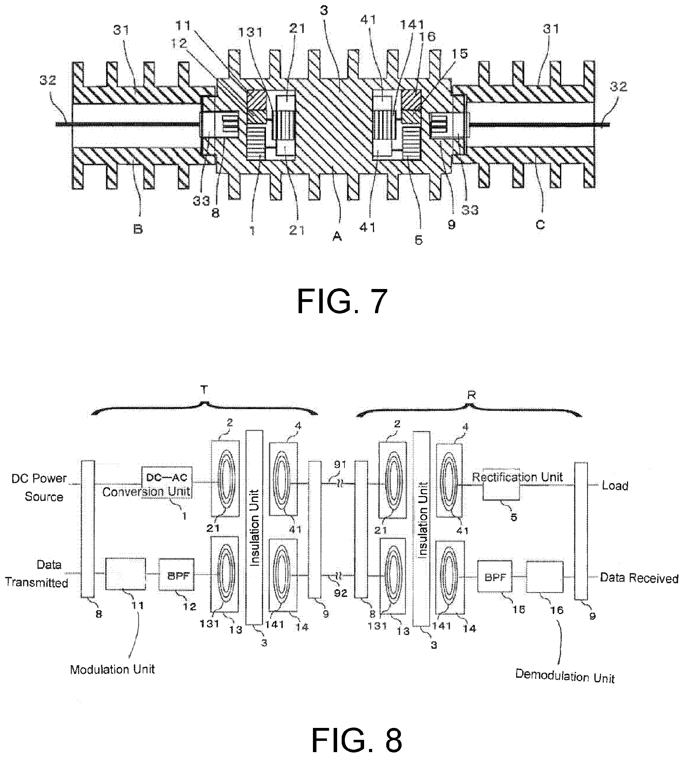

The connection unit configured in this manner is used, for example, in a state illustrated in Fig. 7. Specifically, the housing **B** is inserted into the housing **A** after the plug 33 of the connection unit on the power source side is connected to the connector 8 of the power supply device, and the housing **C** is inserted into the housing **A** after the plug 33 of the connection unit on the external apparatus side is connected to the connector 9. The insulation unit 31 is not necessarily required in order to provide insulation between the power source side and the external apparatus side, but it is desirable to provide the insulation unit 31 in order to electrically protect the connector 8 (9).

In the power supply device having the above-described configuration, power is supplied from the resonance unit 2 to the side of the resonance unit 4 in a similar manner to the first embodiment. The AC current is excited also in the secondary coil 41 by the alternating current from the tertiary coil 131. Therefore, the output voltage of the resonance unit 4 becomes a voltage corresponding to the sum of the AC current excited in the secondary coil 41 by the AC magnetic field from the primary coil 21 and the AC current excited in the secondary coil 41 by the AC magnetic field from the tertiary coil 131.

Data is transmitted in the power supply device as follows.

The modulation unit 11 modulates a carrier wave in accordance with transmission data supplied via the connector 8. The modulation performed by the modulation unit 11, for example, may be amplitude modulation (Amplitude Shift Keying). The frequency of the carrier wave is the resonance frequency f2 of the resonance unit 13. This modulation generates a side band centered on the carrier wave. This side band has two bands: the frequency of the carrier wave frequency minus the frequency of the transmission data; and the frequency of the carrier wave plus the frequency of the transmission data. The BPF 12 allows a data signal of a band centered on the frequency of the carrier wave to pass therethrough to supply the data signal to the resonance unit 13.

An AC current corresponding to the supplied data signal flows through the tertiary coil 131 of the resonance unit 13, and an AC magnetic field corresponding to this current is generated. An AC current is excited in the quaternary coil 141 in accordance with the AC magnetic field from the tertiary coil 131 and the AC magnetic field from the primary coil 21. Therefore, the output voltage of the resonance unit 14 becomes a voltage corresponding to the sum of the AC current excited in the quaternary coil 141 by the AC magnetic field from the tertiary coil 131 and the AC current excited in the quaternary coil 141 by the AC magnetic field from the primary coil 21.

The BPF 15 allows a frequency centered on the resonance frequency f2 of the output voltage of the resonance unit 4 to pass therethrough. Thus, a frequency component of the AC current excited in accordance with the AC magnetic field from the primary coil 21 is removed, and the data signal is reproduced. The demodulation unit 16 demodulates the data signal supplied from the BPF 15 and reproduces reception data. The reproduced reception data is supplied to a control circuit or the like within the apparatus via the connector 9.

As described above, according to this embodiment, a data signal is transmitted between the resonance unit 13 and the resonance unit 14. This, in addition to the effects of the first embodiment, allows for data communication between the outside of an apparatus and a control circuit or the like within the apparatus. Thus, power transmission and data communication can both be carried out in an electrically insulated state in an application in which data on a sensor in an apparatus is to be transmitted to an information processing apparatus installed at a remote location, for example.

In the above-described example, the data signal is transmitted from the resonance unit 13 to the resonance unit 14. It should be noted that the data signal may be transmitted bidirectionally when another pair of resonance units is provided. Alternatively, the data signal can be transmitted bidirectionally between the side of the resonance unit 13 and the side of the resonance unit 14 when transmission control, such as collision avoidance of transmission data, is carried out appropriately. In the above-described example, power is supplied from the side of the resonance unit 2 to the side of the resonance unit 4 and a data signal is transmitted from the side of the resonance unit 13 to the side of the resonance unit 14. Alternatively, power and a data signal to be transmitted can be modified as appropriate, and for example, power can be supplied in the form of an AC voltage from the side of the resonance unit 13 to the side of the resonance unit 14.

Fig. 8 is a block diagram illustrating an exemplary configuration of a power supply device according to a third embodiment of the present invention.

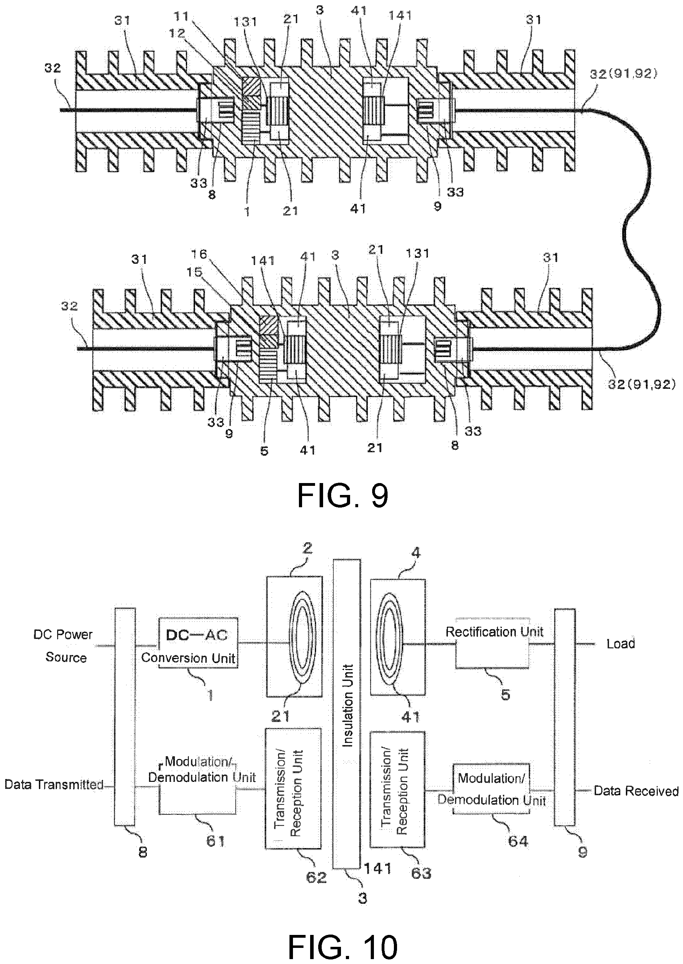

Fig. 9 is a cross-sectional view illustrating an exemplary configuration of the power supply device according to the third embodiment.

In the first embodiment and the second embodiment, a case in which a single power supply device is used has been described. In this embodiment, a case in which two power supply devices-one on the power source side and one on the apparatus side-will be described.

In this embodiment, a power signal is transmitted in an alternating current through a transmission path 91 between a power supply device T on the power source side and a power supply device R on the apparatus side. In addition, in this embodiment, a modulated data signal is transmitted through a transmission path 92 between the power supply device T on the power source side and the power supply device R on the apparatus side. In Figs. 8 and 9, portions having similar functions as those illustrated in Figs. 1 and 4 to 7 are given identical reference characters.

In this embodiment, an AC voltage from the resonance unit 4 in the power supply device T on the power source side is supplied, without being modified, to the resonance unit 2 in the power supply device R on the apparatus side through the transmission path 91. An AC voltage from the resonance unit 14 in the power supply device T on the power source side is supplied, without being modified, to the resonance unit 13 in the power supply device R on the apparatus side through the transmission path 92. Thus, in this embodiment, the power supply device T on the power source side and the transmission paths can be electrically insulated from each other, and the transmission paths and the power supply device R on the apparatus side can be electrically insulated from each other.

As described above, according to this embodiment, the power supply device T on the power source side and the transmission paths can be electrically insulated from each other, and the transmission paths and the power supply device R on the apparatus side can be electrically insulated from each other. Thus, any influence of a surge voltage in the transmission paths on the power source side or the apparatus side can be reduced. Therefore, any influence of a surge voltage can be reduced in an application in which data on a sensor in an apparatus is to be transmitted to an information processing apparatus installed at a remote location via the transmission path 91 or 92 with an extended length, for example.

Fig. 10 is a block diagram illustrating an exemplary configuration of a power supply device according to a fourth embodiment of the present invention.

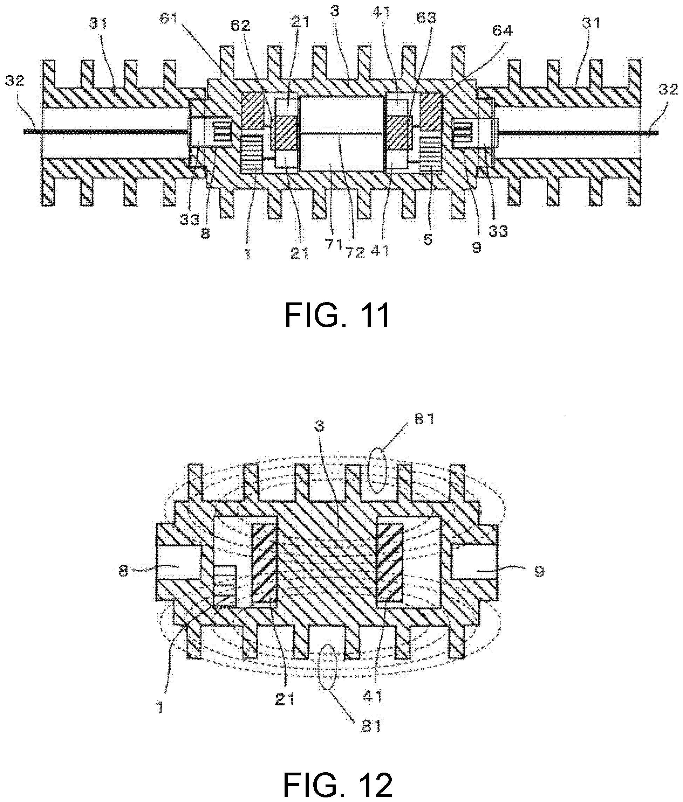

Fig. 11 is a cross-sectional view illustrating an exemplary configuration of the power supply device according to the fourth embodiment.

With regard to the power supply device according to the second embodiment or the third embodiment, an example in which power supply and data signal transmission are carried out with two pairs of resonance units has been described. In this embodiment, power is supplied with a pair of resonance units 2 and 4, and data is transmitted in an optical signal. In addition, in this embodiment, data can be transmitted bidirectionally in an optical signal. In Fig. 10, portions having similar functions as those illustrated in Fig. 1 and Figs. 4 to 9 are given identical reference characters.

The power supply device according to this embodiment includes a modulation/demodulation unit 61 that modulates and demodulates communication data, a transmission/reception unit 62 that transmits and receives an optical signal via the insulation unit 3, a transmission/reception unit 63 that transmits and receives an optical signal to and from the transmission/reception unit 62 via the insulation unit 3, and a modulation/demodulation unit 64 that modulates and demodulates communication data. In this embodiment, the insulation unit 3 is constituted by an insulator 71 that is transparent to an optical signal used for communication, and the insulation unit 3 is housed in the housing A. For the optical signal transmitted and received between the transmission/reception unit 62 and the transmission/reception unit 63, an infrared laser beam 72 is used, for example.

The modulation/demodulation unit 61 modulates transmission data (communication data) received via the connector 8 into a data signal and supplies the data signal to the transmission/reception unit 62. In addition, the modulation/demodulation unit 61 demodulates a data signal supplied from the transmission/reception unit 62 to reproduce reception data (communication data) and supplies the reception data to an apparatus on the power source side via the connector 8. The transmission/reception unit 62 converts the data signal supplied from the modulation/demodulation unit 61 into an optical signal and transmits the optical signal to the transmission/reception unit 63. In addition, the transmission/reception unit 62 converts an optical signal received from the transmission/reception unit 63 into a data signal and supplies the data signal to the modulation/demodulation unit 61.

The transmission/reception unit 63 converts the optical signal received from the transmission/reception unit 62 into a data signal and supplies the data signal to the modulation/demodulation unit 64. In addition, the transmission/reception unit 63 converts a data signal supplied from the modulation/demodulation unit 64 into an optical signal and transmits the optical signal to the transmission/reception unit 62. The modulation/demodulation unit 64 demodulates the data signal supplied from the transmission/reception unit 63 to reproduce reception data (communication data) and supplies the reception data to a control circuit or the like within an apparatus via the connector 9. In addition, the modulation/demodulation unit 64 modulates transmission data (communication data) received via the connector 9 into a data signal and supplies the data signal to the transmission/reception unit 63.

When resonance units that are coupled through a magnetic field are used, there is an upper limit on the resonance frequency. However, the use of an optical signal for transmitting a data signal allows for high-speed data communication, as compared to a case in which pairing resonance units are used.

As described above, according to this embodiment, a data signal is transmitted in an optical signal between an apparatus on the power source side and an external apparatus. This, in addition to the effects of the first embodiment, allows for high-speed data communication.

In the second embodiment and the third embodiment, an example in which power supply and data signal transmission are carried out with two pairs of resonance units has been described. Alternatively, a greater number of pairing resonance units may be provided, and power and a data signal to be supplied may be combined as appropriate.

In addition, as illustrated in Fig. 12, for example, it is desirable to reduce an influence of a magnetic flux 81 from the primary coil 21 and the secondary coil 41. To this end, for example, it is desirable to provide a gap between a circuit board, such as the DC-AC 1, and the primary coil 21 and secondary coil 41. It is desirable that the circuit board be oriented in a direction of minimizing the voltage induced by the magnetic flux 81.

The foregoing embodiments are merely examples for implementing the present invention and should be corrected or modified as appropriate in accordance with configurations and various conditions of an apparatus or a system to which the present invention is applied, and the present invention is not limited to the foregoing embodiments.

## Claims

1. A power supply device comprising:
a first resonance unit (2) having a first resonance frequency;
a second resonance unit (4) coupled to the first resonance unit (2) through a magnetic field, the second resonance unit (4) having the first resonance frequency; and
an insulation unit (3) that provides electrical insulation between the first resonance unit (2) and the second resonance unit (4),
the insulation unit (3) having a predetermined insulation distance (d) determined in accordance with a predetermined withstanding voltage and an insulator of the insulation unit (3).

2. The power supply device according to claim 1 further comprising:
a power source that supplies a power signal of the first resonance frequency to the first resonance unit (2).

3. The power supply device according to claim 1 or 2 further comprising:
a rectification unit (5) that rectifies a signal from the second resonance unit (4) and supplies the signal to a load.

4. The power supply device according to any one of claims 1 to 3, wherein
the first resonance unit (2) includes a first coil (21),
the second resonance unit includes a second coil (41), and
the first coil (21) and the second coil (41) are disposed in accordance with the insulation distance (d).

5. The power supply device according to any one of claims 1 to 4, wherein
a diameter of the first coil (21) and a diameter of the second coil (41) are determined in accordance with the insulation distance (d).

6. The power supply device according to any one of claims 1 to 5 further comprising:
a third resonance unit (13) having a second resonance frequency different from the first resonance frequency; and
a fourth resonance unit (14) coupled to the third resonance unit (13) through a magnetic field via the insulation unit (3), the fourth resonance unit (14) having the second resonance frequency.

7. The power supply device according to any one of claims 1 to 6 further comprising:
a modulation unit (11) that supplies, to the third resonance unit (13), a modulation signal obtained by modulating the second resonance frequency in accordance with transmission data; and
a demodulation unit (16) that demodulates a signal from the fourth resonance unit (14) to generate reception data.

8. The power supply device according to any one of claims 1 to 7 further comprising:
a transmission unit (62) that transmits an optical signal via the insulation unit (3); and
a reception unit (63) that receives the optical signal via the insulation unit (3),
wherein the insulation unit (3) is formed of a transparent insulator.
